# EUROPEAN PATENT APPLICATION

(11) **EP 2 762 680 A1**
(43) Date of publication of application: **06.08.2014**
(21) Application number: 14153008.9
(22) Date of filing: 29.01.2014
(51) Int. Cl.: F01D 5/28

(54) **Multilayer component and fabrication process**

(30) Priority: 30.01.2013 US 201313754281
(71) Applicant: General Electric Company, Schenectady, New York 12345 (US)
(72) Inventor: Lin, Dechao, Greenville, SC South Carolina 29615 (US); Schick, David Edward, Greenville, SC South Carolina 29615 (US); Kottilingam, Srikanth Chandrudu, Greenville, SC South Carolina 29615 (US); Cui, Yan, Greenville, SC South Carolina 29615 (US)
(74) Representative: Szary, Anne Catherine

(57) **Abstract**

A multilayer component (100) and fabrication process are disclosed. The multilayer component (100) includes a foil surface layer (106) abutting the bond coat layer (104) and a channel-forming material (108) positioned between the foil surface layer (106) and a substrate. (110) The channel-forming material (108) defines at least a portion of a channel (112). The channel (112) can be at least partially defined by a channel-forming material (108) brazed with a foil surface layer (106) to a substrate (110) of the multilayer component (100). The process includes applying one or more layers to a foil surface layer (106) and applying a channel-forming material (108) to at least partially define a channel (112) between the foil surface layer (106) and a substrate (110).

## Description

### FIELD OF THE INVENTION

The present invention is directed to components and fabrication processes. More particularly, the present invention relates to multilayer components and fabrication processes.

### BACKGROUND OF THE INVENTION

Gas turbine engines and power generation turbines operate at high temperatures in order to increase their efficiency. Various advancements have been employed to enable the components, such as airfoils, of such engines to operate for longer periods of time at such high temperature. Airfoils employed in modem, high efficiency power generation combustion turbine engines rely on high quality materials such as single crystal alloys and precise control of the part's internal and external dimensions. In addition to the use of high temperature resistant superalloys, various airfoils have been designed to include internal cooling systems. One such internal cooling system is the use of cooling passages located inside and near the surface of the airfoil.

A number of techniques have been employed to provide such turbine airfoils with near surface cooling passages. For example, some techniques have used high efficiency, thin-walled turbine components, such as turbine blade airfoils comprising a superalloy substrate with cooling channels covered by a thin superalloy skin. The thin skin is bonded to the inner spar structure of a turbine blade airfoil. One method of forming cooling passages includes forming an internal channel within an article, such as a cooling channel in an air-cooled blade, vane, shroud, combustor or duct of a gas turbine engine. The method generally entails forming a substrate to have a groove recessed in its surface. A sacrificial material is deposited in the groove to form a filler that can be preferentially removed from the groove. A permanent layer is deposited on the surface of the substrate and over the filler, after which the filler is removed from the groove to yield the desired channel in the substrate beneath the permanent layer. Another method includes forming cooling passages by machining portions of a substrate of a component.

Such techniques can have several drawbacks. Use of specialty materials can be expensive, can be limited based upon availability, can require additional research to address other features of the specialty materials, and can otherwise limit flexibility of applications. Similarly, machining of materials can result in undesirable features, such as, an inability to re-produce or repair components that have already been machined. In addition, machining of such cooling holes is especially difficult in near-surface components and/or complex-shaped parts (such as curved parts).

A multilayer component and fabrication process that do not suffer from one or more of the above drawbacks would be desirable in the art.

### BRIEF DESCRIPTION OF THE INVENTION

In an exemplary embodiment, a multilayer component includes a ceramic coating layer, a bond coat layer abutting the ceramic coating layer, a foil surface layer abutting the bond coat layer, and a channel-forming material positioned between the foil surface layer and a substrate. The channel-forming material defines at least a portion of a channel.

In another exemplary embodiment, a multilayer component having a channel is at least partially defined by a channel-forming material brazed with a foil surface layer to a substrate of the multilayer component.

In another exemplary embodiment, a process of fabricating a multilayer component includes applying one or more layers to a foil surface layer and applying a channel-forming material to at least partially define a channel between the foil surface layer and a substrate.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is a schematic view of an exemplary multilayer component according to an embodiment of the disclosure.
FIG. 2 is a schematic view of an exemplary multilayer component according to an embodiment of the disclosure.
FIG. 3 is a schematic view of an exemplary multilayer component according to an embodiment of the disclosure.
FIG. 4 is a schematic view of an exemplary multilayer component according to an embodiment of the disclosure.
FIG. 5 is a flow diagram of an exemplary process of fabricating an exemplary multilayer component according to an embodiment of the disclosure.
FIG. 6 is a flow diagram of an exemplary process of fabricating an exemplary multilayer component according to an embodiment of the disclosure.
FIG. 7 is a flow diagram of an exemplary process of fabricating an exemplary multilayer component according to an embodiment of the disclosure.

Wherever possible, the same reference numbers will be used throughout the drawings to represent the same parts.

### DETAILED DESCRIPTION OF THE INVENTION

Provided is an exemplary multilayer component and fabrication process. Embodiments of the present disclosure, for example, in comparison to cooling arrangements that do not include one or more of the features disclosed herein, permit more time-efficient and/or cost-efficient formation of cooling channels in components, allow a higher level of flexibility in material selection for multilayer components, reduce overall turbine component costs, permit machining to be reduced or eliminated (or used in an augmented manner), permit specialty materials to be reduced or eliminated (or used in an augmented manner), provide increased oxidation resistance, reduce furnace time for brazing of components, or a combination thereof.

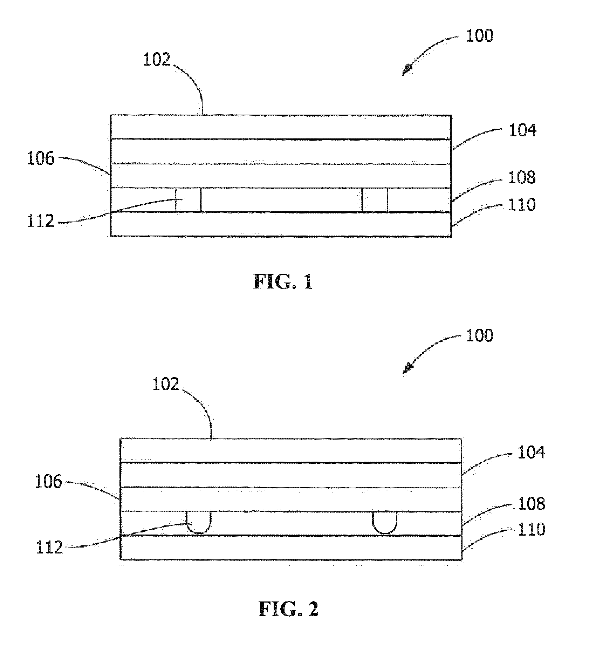

Referring to FIGS. 1-4, a multilayer component 100 includes a channel 112 positioned between a foil surface layer 106 and a substrate 110. The substrate 110 is any suitable metal or metallic alloy, for example, a nickel-based alloy, a cobalt-based alloy, or a combination thereof. In one embodiment, the substrate 110 has a composition, by weight, of about 22% chromium, about 18% iron, about 9% molybdenum, about 1.5% cobalt, about 0.6% tungsten, about 0.10% carbon, about 1% manganese, about 1% silicon, about 0.008% boron, incidental impurities, and a balance nickel. In one embodiment, the substrate 110 has a composition, by weight, of between about 50% and about 55% Nickel + Cobalt, between about 17% and about 21% chromium, between about 4.75% and about 5.50% columbium + tantalum, about 0.08% carbon, about 0.35% manganese, about 0.35% silicon, about 0.015% phosphorus, about 0.015% sulfur, about 1.0% cobalt, between about 0.35% and about 0.80% aluminum, between about 2.80% and about 3.30% molybdenum, between about 0.65% and about 1.15% titanium, between about 0.001% and about 0.006% boron, about 0.15% copper, incidental impurities, and a balance of iron.

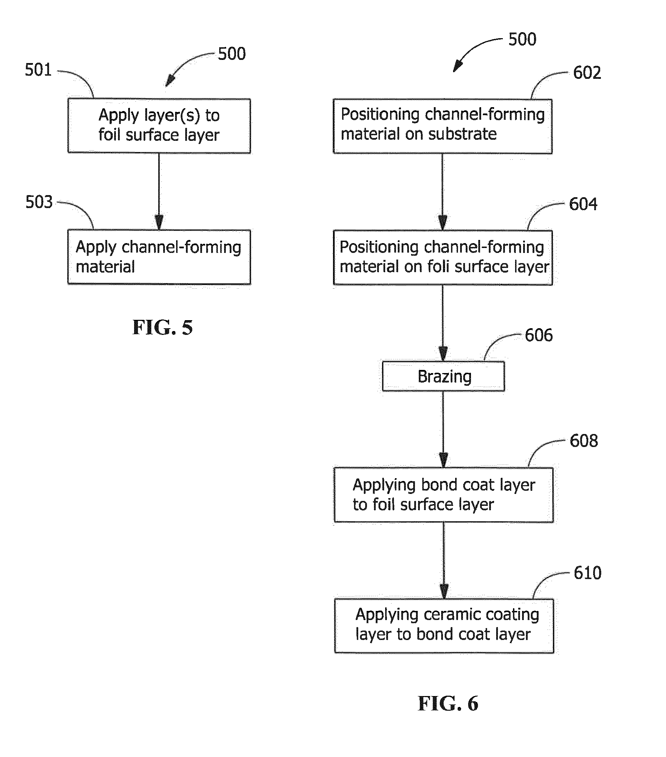

In one embodiment, the multilayer component 100 is an airfoil, a vane, a blade, a nozzle, a duct, a complex-shaped component, a component having a curved region, any other suitable turbine component, or a combination thereof. The channel 112 is at least partially defined by a channel-forming material 108. In one embodiment, the channel-forming material 108 and the foil surface layer 106 are brazed to the substrate 110 simultaneously or separately as is shown and described below with reference to FIGS. 5-6.

The multilayer component 100 includes any suitable number of layers or types of layers. As shown in FIGS. 1-4, in one embodiment, the multilayer component includes the foil surface layer 106, the substrate 110, the channel-forming material 108, a bond coat layer 104, and a ceramic coating layer 102. In another embodiment, the multilayer component 100 includes the foil surface layer 106, the substrate 110, and the channel-forming material 108 As will be appreciated, any suitable intermediate layers or additional layers are capable of further defining the multilayer component 100.

The foil surface layer 106 is any suitable material capable of being applied to the channel-forming material 108, for example, by brazing. The foil surface layer 106 is capable of adhering to the substrate 110, the channel-forming material 108, the bond coat 104, or a combination thereof. In one embodiment, the foil surface layer 106 abuts the bond coat layer 104 and/or the channel-forming layer 108. In one embodiment, the foil surface layer 106 is an interlayer with material selected based upon materials used in the bond coating layer 104 and the channel-forming layer 108, for example, to provide a predetermined thermal property transition from the ceramic coating layer 102 to the substrate 110 to reduce or mitigate thermal-induced stress built up in the entire coating structure. In one embodiment, the foil surface layer 106 includes oxidation resistance that is equal to or better than that of the substrate 110 and/or a thermal conductivity that is equal to or lower than that of the substrate 110.

The channel-forming material 108 is positioned between the foil surface layer 106 and the substrate 110. The channel-forming material 108 includes a material corresponding to the composition and/or thermal properties of the substrate 110 and/or has a thermal conductivity that is equal to or less than the thermal conductivity of the substrate 110. In one embodiment, the channel-forming material 108 includes an electrospark deposition (ESD) coating. The material is the same as the substrate 110 or is any corresponding material to the substrate 110, for example, having equal or lower thermal conductivity. In another embodiment, the channel-forming material 108 includes a pre-sintered preform (PSP), such as, one or more PSP strips, one or more PSP braze balls, one or more PSP chiclets, one or more PSP foils, one or more other suitable PSP structures, or a combination thereof.

In one embodiment, the channel-forming material 108 includes PSP strips containing at least two materials with various mixing percentages. For example, in one embodiment, the first material has a composition, by weight, of between about 8% and about 8.8% chromium, between about 9% and about 11% cobalt, between about 2.8% and about 3.3% tantalum, between about 5.3% and about 5.7% aluminum, up to about 0.02% boron (for example, between about 0.01% and about 0.02% boron), between about 9.5% and about 10.5% tungsten, up to about 0.17% carbon (for example, between about 0.13% and about 0.17% carbon), up to about 1.2% titanium (for example, between about 0.9% and about 1.2% titanium), between about 1.2% and about 1.6% hafnium, and a balance of nickel. In one embodiment, the second material is a braze alloy powder, for example, having a composition, by weight, of between about 13% and about 15% chromium, between about 9% and about 11% cobalt, between about 2.25% and about 2.75% tantalum, between about 3.25% and about 3.74% aluminum, between about 2.5% and about 3% boron, up to about 0.1% yttrium (for example, between about 0.02% and about 0.1% yttrium, and a balance of nickel. Suitable ratios, by weight, for mixing the first material and the second material include, but are not limited to, about 50:50, about 55:45, about 60:40, about 45:55, and about 40:60.

In a further embodiment, the channel-forming material 108 has a first channel-forming material 108 and a second channel-forming material 108 in a composition that includes, for example, about 80% a first composition and about 20% a second composition, about 60% a first composition and about 40% a second composition, about 50% a first composition and about 50% a second composition, or any other suitable composition selected for providing desired properties.

The channel-forming material 108 is a suitable predetermined geometry or corresponding geometries. Suitable geometries include a substantially planar geometry (for example, a flat plate), a tape-like geometry (for example, a flexible tape capable of being rolled, a flexible tape capable of bending at a right angle without mechanical force, or a flexible tape having a predetermined length), a substantially consistent thickness geometry (for example, about 0.030 inches, about 0.160 inches, or between about 0.020 inches and about 0.080 inches), a rigid tape, a varying thickness geometry (for example, having a thickness of about 0.010 inches in a first region and having a thickness of about 0.020 inches in a second region or having a thickness of about 0.020 inches in a first region and having a thickness of about 0.030 inches in a second region), or combinations thereof. In one embodiment having the first channel-forming material 108 and the second channel-forming material 108, the first channel-forming material 108 and the second channel-forming material 108 include a substantially identical geometry. In another embodiment, the first channel-forming material 108 and the second channel-forming material 108 have different geometries (for example, the first channel-forming material 108 having thicker regions corresponding to thinner regions in the second channel-forming material 108).

In one embodiment, a flexible tape is used in addition to or alternative to the channel-forming material 108, the PSP, and/or the ESD coating. The flexible tape is formed by combining a first composition with a second composition along with a binder and then rolling the mixture to form tape-like or rope-like structures. The flexible tape is capable of being bent to several geometries, includes a predetermined thickness, for example, about 0.020 inches to about 0.125 inches, and is capable of being cut to a predetermined length.

The channel-forming material 108 is arranged to form one or more of the channels 112 within the multilayer component 100. In one embodiment with the PSP, two or more of the PSP structures are arranged such that a region between the PSP structures defines the width of one or more of the channels 112. Additionally or alternatively, one or more of the PSP structures includes a height defining the height of the one or more channels 112. In one embodiment, the height of the PSP structure is about 0.015 inches and the width is about 0.015 inches. In one embodiment, the height of the PSP structure is about 0.2 inches and the width is about 0.15 inches. In further embodiments, the height and/or width range between.

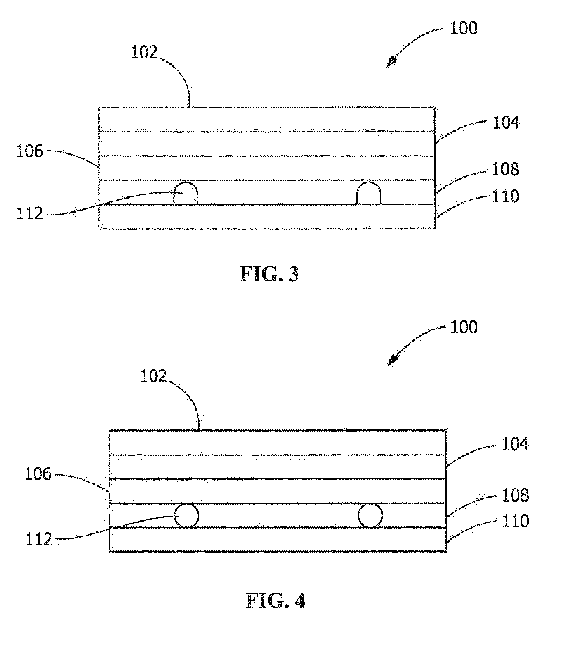

The channel(s) 112 are positioned in any suitable portion of the multilayer component 100, for example, within any suitable predetermined distance of an external region, such as those abutting the ceramic coating layer 102. Suitable predetermined distances include, but are not limited to, about 1 mil, about 5 mils, about 30 mils, between 1 mil and about 5 mils, between about 5 mils and about 30 mils, between about 1 mil and about 30 mils, or any suitable combination, sub-combination, range, or sub-range therein. As shown in FIG. 1, in one embodiment, one or more of the channels 112 extend(s) from the foil surface layer 106 to the substrate 110 and, thus, is/are defined by the foil surface layer 106, the substrate 110, and the channel-forming material 108. As shown in FIG. 2, in one embodiment, one or more of the channels 112 extend(s) from the foil surface layer 106 into the channel-forming region 108 without extending to the substrate 110 and, thus, is/are defined by the foil surface layer 106 and the channel-forming material 108. As shown in FIG. 3, in one embodiment, one or more of the channels 112 extend(s) from the substrate 110 into the channel-forming region 108 without extending to the foil surface layer 106 and, thus, is/are defined by the substrate 110 and the channel-forming material 108. As shown in FIG. 4, in one embodiment, one or more of the channels 112 is completely defined by the channel-forming region 108 and does not extend to the foil surface layer 106 or the substrate 110. In some embodiments with the channel at least partially defined by the substrate 110, dimensions of the channel 112 are at least partially defined by the substrate 110 being machined. In other embodiments, the substrate 110 is not machined.

The channel(s) 112 is/are any suitable structure for transporting fluid, such as, air, steam, gaseous fluid, liquid fluid, coolant, other suitable materials capable of transport, or a combination thereof. One suitable structure is a cooling passage. The channel(s) 112 includes a geometry, for example, a cross-sectional profile selected from the group consisting of circular, half-round, triangular, oval-shaped, square-shaped, rectangular, trapezoidal, complex-shaped, crescent-shaped, wave-shaped, and combinations thereof. In one embodiment, the channel(s) 112 is formed between two of the multilayer components 100 positioned adjacently.

Referring to FIG. 5, a process 500 of fabricating the multilayer component 100 includes applying one or more layers to the foil surface layer 106 (step 501) and applying the channel-forming material 108 to at least partially define the channel 112 between the foil surface layer 106 and the substrate 110 (step 503) and then brazing them together. In one embodiment, the foil surface layer 106 and the channel-forming material 108 are applied to the substrate 110 by concurrently brazing.

Referring to FIG. 6, in one embodiment, the applying of the channel-forming material 108 to at least partially define the channel 112 between the foil surface layer 106 and the substrate 110 (step 503) includes the channel-forming material 108 being positioned on the substrate 110 (step 602). Then, the foil surface layer 106 is positioned on the channel-forming material (step 604). Next, the channel-forming material 108 and the foil surface layer 106 are brazed to the substrate (step 606). In further embodiments, the bond coat layer 104 is applied to the foil surface layer 106 (step 608), then the ceramic coating layer 102 is applied to the bond coat layer 104 (step 610). The bond coat layer 104 and/or the ceramic coating layer 102 are applied before or after the brazing of the foil surface layer and the channel-forming material 108 (step 606).

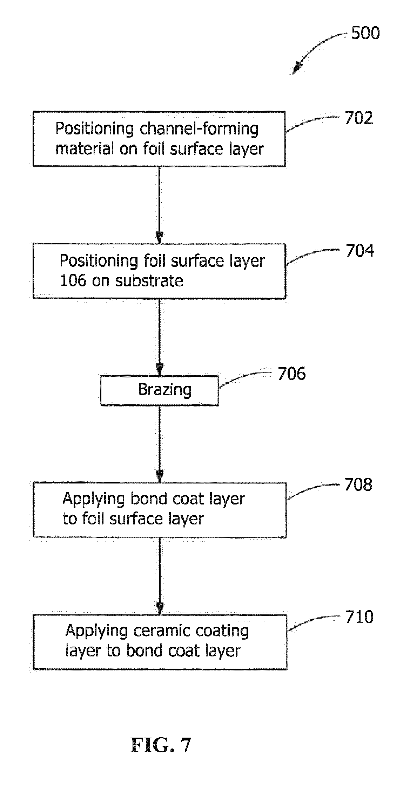

Referring to FIG. 7, in one embodiment, the applying of the channel-forming material 108 to at least partially define the channel 112 between the foil surface layer 106 and the substrate 110 (step 503) includes the channel-forming material 108 being positioned on the foil surface layer (step 702). Then, the foil surface layer 106 is positioned on the substrate (step 704). Next, the channel-forming material 108 and the foil surface layer 106 are brazed to the substrate (step 706). In further embodiments, the bond coat layer 104 is applied to the foil surface layer 106 (step 708), then the ceramic coating layer 102 is applied to the bond coat layer 104 (step 710). The bond coat layer 104 and/or the ceramic coating layer 102 are applied before or after the brazing of the foil surface layer and the channel-forming material 108 (step 706).

Referring again to FIGS. 1-4, in one embodiment, the bond coat layer 104 abuts the foil surface layer 106 and the ceramic coating layer 102. Additionally or alternatively, the bond coat layer 104 has a thermal conductivity that is less than the foil surface layer 106.

In one embodiment, the ceramic coating layer 102 abuts the bond coat layer 104 and is exposed to the environment of the multilayer component 100, such as, a hot gas path of a turbine. The ceramic coating layer 102 is any suitable thermally-resistant coating. Suitable coatings include, but are not limited to, thermal barrier coatings (TBCs) and environmental barrier coatings (EBCs). In one embodiment, the TBC includes yttria stabilized zirconia or yttria stabilized borate. Additionally or alternatively, the TBC has a thermal conductivity that is less than the bond coat layer 104.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A multilayer component, comprising:
a ceramic coating layer;
a bond coat layer abutting the ceramic coating layer;
a foil surface layer abutting the bond coat layer;
a channel-forming material positioned between the foil surface layer and a substrate;
wherein the channel-forming material defines at least a portion of a channel.

2. The multilayer component of claim 1, wherein the channel is further defined by the foil surface layer, the substrate, or by the foil surface layer and the substrate layer.

3. The multilayer component of claim 1, wherein the channel is completely defined by the channel-forming material.

4. The multilayer component of any preceding claim, wherein the channel is a cooling passage.

5. The multilayer component of any preceding claim, wherein the channel is defined by machining, or wherein the channel is defined without being machined.

6. The multilayer component of any preceding claim, wherein the channel includes a cross-sectional profile selected from the group consisting of circular, triangular, oval-shaped, square-shaped, rectangular, trapezoidal, complex-shaped, crescent-shaped, wave-shaped, and combinations thereof.

7. The multilayer component of any preceding claim, wherein the channel-forming material is an ESD coating.

8. The multilayer component of any preceding claim, wherein the channel-forming material is a pre-sintered preform.

9. The multilayer component of claim 8, wherein the pre-sintered preform includes two or more types of metal powders, wherein at least one of the two or more types of metal powders is a braze alloy powder.

10. The multilayer component of any preceding claim, wherein the channel is one of a plurality of channels at least partially defined by the channel-forming material.

11. The multilayer component of any preceding claim, wherein the multilayer component includes a curved geometry.

12. The multilayer component of any preceding claim, wherein the foil surface layer and the channel-forming material are brazed to the substrate simultaneously or separately.

13. A multilayer component having a channel, the channel being at least partially defined by a channel-forming material brazed with a foil surface layer to a substrate of the multilayer component.

14. A process of fabricating a multilayer component, the process comprising:
applying one or more layers to a foil surface layer; and
applying a channel-forming material to at least partially define a channel between the foil surface layer and a substrate.

15. The process of claim 14, wherein the channel-forming material is applied to the substrate prior to the foil surface layer being positioned on the channel-forming material, or wherein the channel-forming material is applied to the foil surface layer prior to the channel-forming material being positioned on the substrate.
